# FASCICULE DE BREVET EUROPEEN

(11) **EP 0 546 925 B1**
(45) Date de publication et mention de la délivrance du brevet: **17.01.1996**
(21) Numéro de dépôt: 92403322.8
(22) Date de dépôt: 08.12.1992
(51) Int. Cl.: B65D 85/50, A01K 31/00

(54) **Cage multiple pour le transport des animaux vivants**
Mehrfachkiste zum Transport von lebendigen Tieren
Variable cage for the transport of living animals

(30) Priorité: 12.12.1991 ES 9102763
(43) Date de publication de la demande: 16.06.1993
(73) Titulaire: ALLIBERT EQUIPEMENT, F-92748 Nanterre Cedex (FR)
(72) Inventeur: Vicente Lizon, José, E-08025 Barcelone (ES); Gonzalez Castro, José Antonio, E-08150 Parets Del Valles Barcelone (ES)
(74) Mandataire: Lerner, François

(56) Documents cités:
- EP-A- 0 178 738
- FR-A- 2 508 010
- FR-A- 2 528 277
- US-A- 3 157 155
- US-A- 4 955 318

## Description

L'invention concerne une cage à éléments multiples pour le transport d'animaux vivants, en particulier des volailles, possédant une stabilité supérieure à celle des cages actuelles connues, susceptible de résister, sans déformation, aux efforts auxquels elle serait susceptible d'être soumise en cours d'utilisation.

On connait des cages à éléments multiples pour le transport des volailles, formées par une structure rigide à parois grillagées et métalliques, divisée intérieurement en une pluralité de compartiments superposés au moyen de panneaux métalliques grillagés, réalisés à partir de différents éléments articulés entre eux, l'un d'entre eux étant articulé sur la paroi arrière de la structure. Les panneaux peuvent être placés en position dépliée, de manière que chaque panneau constitue le fond d'un compartiment et le toît du compartiment inférieur. Ces panneaux peuvent se replier les uns sur les autres et contre la face arrière de la structure pour donner accès à la partie supérieure des compartiments. Dans ces cages connues, ces panneaux articulés et pliables présentent un élément articulé qui constitue la porte de façade du compartiment immédiatement supérieur, susceptible de prendre une position verticale de fermeture, où il est accouplé à une ouverture d'accès sur la face avant de la structure, une position d'ouverture pour donner accès au compartiment à partir de l'avant et une position repliée conjointement avec les autres éléments du panneau qui constitue le fond de chaque compartiment.

La pratique a démontré que ce type de cages multiples présentait divers inconvénients. En premier lieu, on peut citer la complexité de la structure des cages; étant donné qu'elles sont composées de parois et de panneaux métalliques grillagés, leur fabrication et leur agencement nécessitent des opérations de matriçage, d'estampage et de pliage, complexes et coûteuses. De plus, l'incorporation de parois grillagées à une structure ou une armature, également métallique, doit se faire par soudage ce qui entraîne une complication de la fabrication et une augmentation de son coût.

Un autre inconvénient que présentent les cages multiples connues est dû aux difficultés qu'implique la fabrication des cages comprenant un nombre différent de compartiments, étant donné qu'il est nécessaire de partir de structures de hauteurs différentes, ce qui a pour effet d'augmenter le prix de revient de leur fabrication.

Un autre type d'inconvénient concerne l'utilisation des cages, qui peuvent comporter des arêtes vives susceptibles de blesser les animaux pendant le transport ou les personnes qui assurent la manutention. De plus, ces cages métalliques se déforment en service et leurs éléments ne conservent pas la précision de formes et de dimensions que l'on pourrait souhaiter, de sorte que le pliage et le dépliage des panneaux articulés s'en trouve affecté, de même que l'ouverture et la fermeture des portes.

En vue de résoudre les inconvénients exposés, il a été réalisé, selon l'invention, une cage multiple pour le transport d'animaux, en particulier des volailles.

La cage en question comprend une pluralité de compartiments empilés, chacun d'eux comprenant une porte d'accès à l'avant et un fond repliable, auquel est articulée la porte avant correspondante. A partir de ce mode de réalisation connu, (voir par exemple FR-A-2 508 010), la cage selon l'invention se caractérise en ce qu'elle est composée d'une armature fixe formée par une base inférieure et un autre élément supérieur, réunis entre eux par des montants verticaux. Ces montants traversent les parois d'une pluralité de modules constitués par des éléments empilés formant compartiment, grillagés et moulés monobloc, munis de faces supérieure et inférieure ouvertes. L'une des faces est occupée par un panneau grillagé repliable qui sépare chaque module du module immédiatement adjacent, étant donné que les modules sont emprisonnés entre les bases supérieure et inférieure du châssis.

Les parois des compartiments présentent des renforts verticaux, munis d'orifices longitudinaux traversés par les montants.

Plus concrêtement, les renforts sont situés dans les angles des compartiments et dans les faces avant et arrière.

De plus, il est ajouté aux renforts situés dans les angles des compartiments des paires d'ouvertures qui définissent autant de moyens de manutention, pour faciliter la manutention de la cage à la main.

La base supérieure est en forme de cadre, pourvu de moyens de verrouillage destinés à fixer un couvercle, grillagé et pliant, fermant le compartiment situé à la partie supérieure de la cage.

Les compartiments sont dotés d'un rebord marginal au niveau du fond, réalisé monobloc avec le compartiment correspondant. Ce rebord constitue une partie fixe du fond de chaque compartiment et le panneau pliant qui constitue la partie mobile du fond est articulé sur un bord du compartiment. Le panneau déplié vient en appui sur un congé ménagé dans le rebord.

Les panneaux pliants sont articulés entre eux de manière à former une charnière comprenant un axe de rotation, dont les extrémités sont logées dans des cavités du rebord marginal lorsque le panneau est déplié.

Pour permettre une meilleure compréhension de la présente description, il est annexé des dessins qui représentent, uniquement à titre d'exemple, un mode de réalisation pratique de la cage multiple.

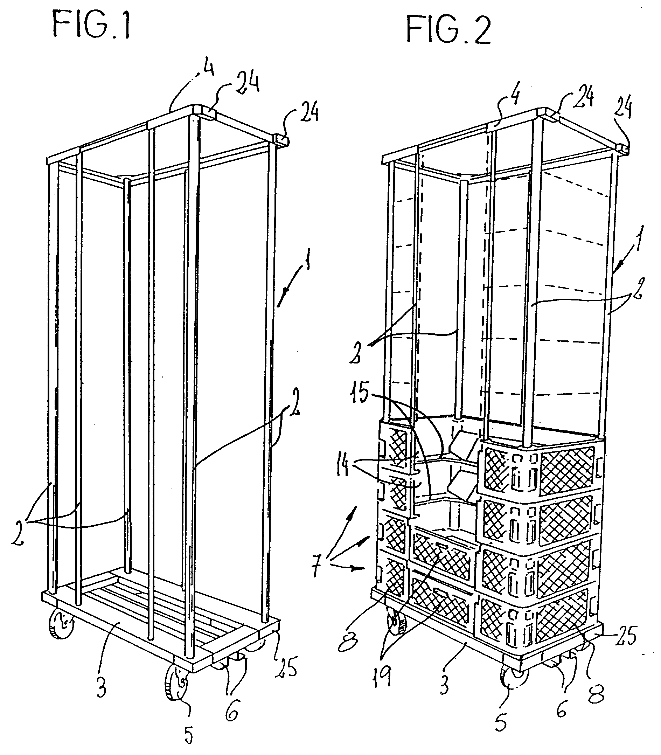

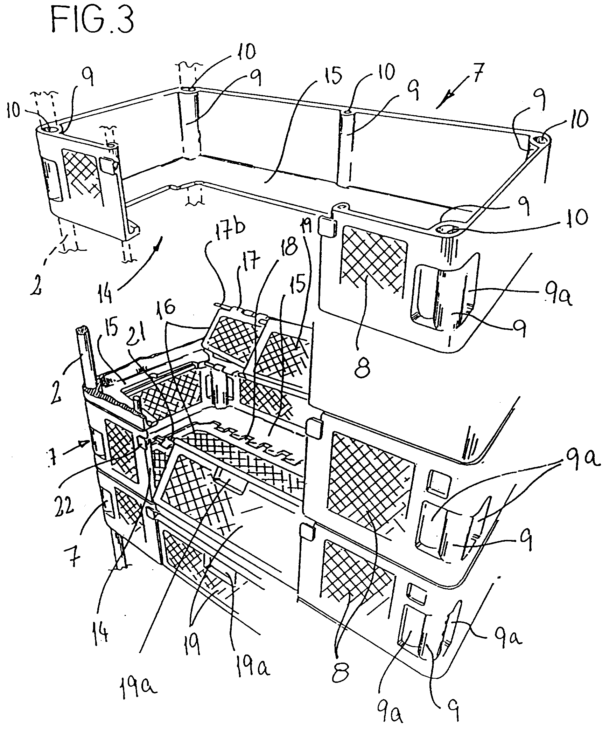

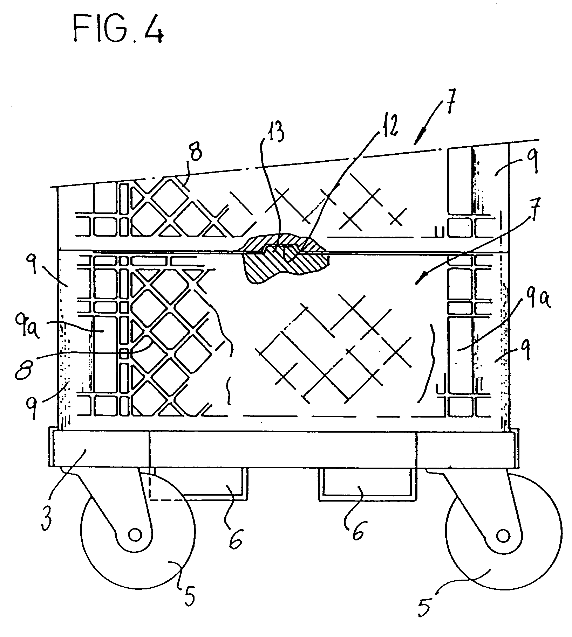

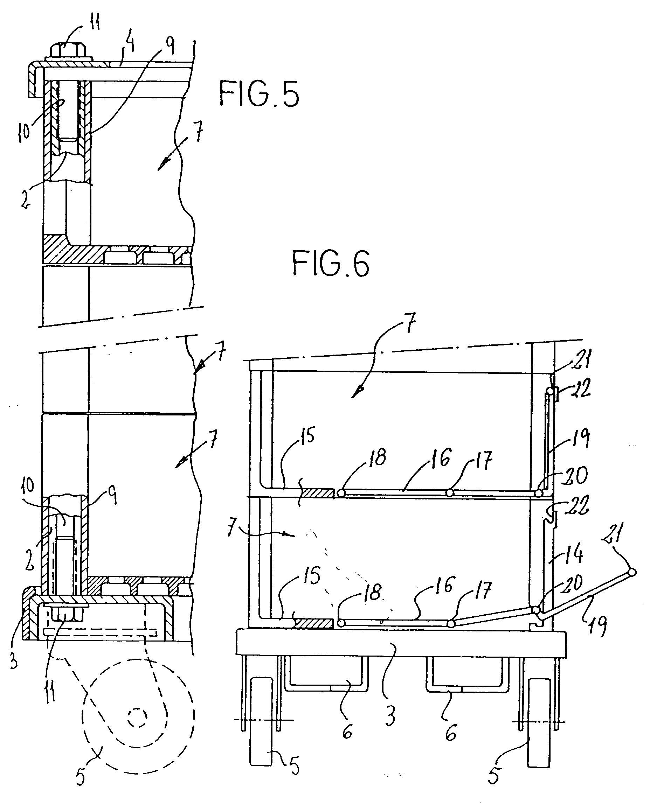

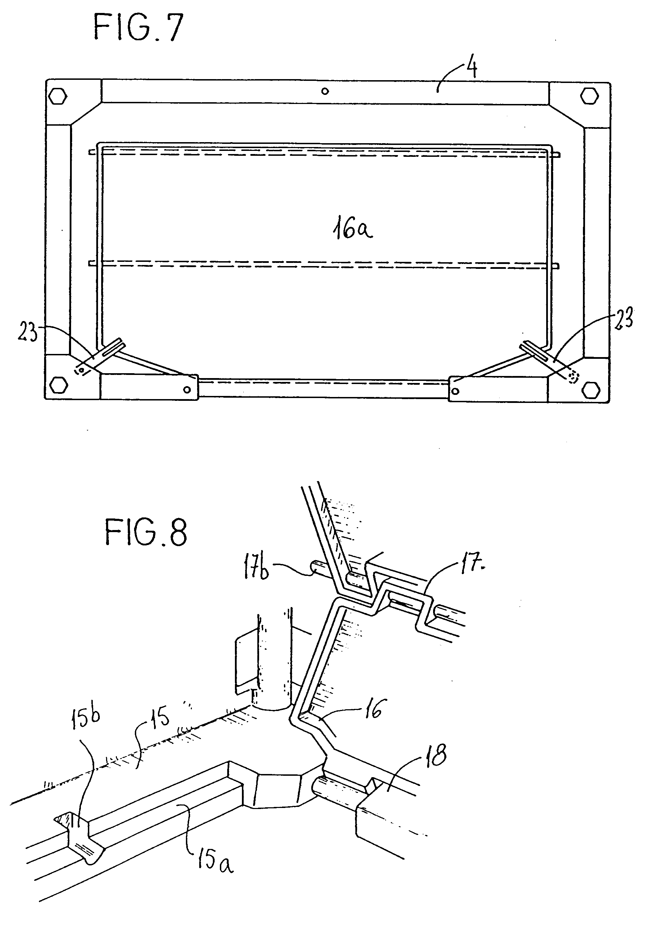

Dans les dessins, la figure 1 est une vue en perspective du châssis ou armature de la cage, dépourvu de modules; la figure 2 est une vue similaire à la figure 1, mais dans laquelle on a incorporé une partie des modules dans la structure et le reste est représenté de façon schématique par des lignes en tirets; la figure 3 représente un détail en perspective, à échelle agrandie, d'un des modules d'une paire de modules incorporés au châssis, tandis que l'autre module est séparé; la figure 4 représente un détail en élévation latérale d'une partie de la cage, partiellement en coupe pour illustrer le jeu des éléments mâles et femelles des modules s'encastrant les uns dans les autres; la figure 5 est un détail en coupe longitudinale de la partie supérieure et inférieure de la cage, représentant l'incorporation des montants à la plateforme inférieure et au cadre supérieur constituant le châssis; la figure 6 est un détail de la cage en coupe longitudinale, dans lequel on peut apprécier la disposition des panneaux pliants en deux positions différentes; la figure 7 est une vue en plan du cadre supérieur du châssis de la cage, avec un panneau de fermeture en position fermée; et la figure 8 est un détail en perspective représentant le bord intérieur de l'un des modules.

Sur les dessins, la cage multiple pour le transport d'animaux vivants comprend: un châssis désigné d'une manière générale par 1 (figure 1), composé d'une pluralité de montants ou de barres 2, fixés à leurs extrémités sur une plateforme 3 et sur un cadre supérieur 4. La plateforme 3 est pourvue de roues orientables 5 et de rails de guidage 6 dans lesquels on peut introduire les bras d'un engin élévateur classique.

Le châssis 1 est pourvu d'une pluralité de modules, désignés d'une manière générale par 7, en forme de cuvette ou de compartiment, moulés monobloc, dont les parois présentent un grillage en oblique 8 pour éviter la torsion des compartiments sous l'effet des efforts auxquels ils seront soumis en cours d'utilisation de la cage. Ces compartiments sont pourvus de renforts 9, traversés par des orifices 10, ménagés dans les angles verticaux et dans les parois avant et arrière, traversés par les barres 2, celles qui traversent les angles étant d'un diamètre supérieur à celui des barres restantes.

Il est ajouté aux renforts 9 ménagés aux angles, des paires d'ouvertures 9a, définissant des moyens de prise pour la manutention du compartiment.

Les modules ou compartiments 7 sont montés sur les barres 2 et empilés, et maintenus prisonniers entre le cadre 2 et la plateforme 3 au moyen de boulons 11 fixés aux extrémités des barres, de manière que le châssis 1 agisse d'une façon analogue à celle d'une presse par rapport aux modules 7, afin d'assurer le maintien des formes et la rigidité de la cage (figure 5).

Afin d'assurer l'immobilisation totale des modules empilés 7, ces derniers sont pourvus d'une série de cavités et de saillies 12, 13, ménagées sur les bords du fond et des parois, de manière à s'encastrer mutuellement en prise (figure 4).

Les modules ou compartiments 7 sont ouverts par leurs faces supérieure et inférieure. En outre, la grande face, destinée à occuper la partie avant de la cage, présente une ouverture centrale 14. La face inférieure ouverte, qui correspond au fond des modules, est pourvue d'un rebord horizontal 15, dirigé en saillie vers l'intérieur, réalisé monobloc avec le module, plus élargi à l'arrière que dans le reste du corps, et qui forme une bordure fixe et rigide, entourant le fond des modules, à l'exception de la partie ouverte 14.

Chaque module comprend un panneau rabattable 16 formé par deux éléments grillagés, articulés entre eux par l'un de leurs bords formant charnière 17. L'un des éléments du panneau 16 est articulé de son côté à la partie arrière du rebord 15, de manière à former entre eux une charnière d'articulation 18 (figures 3 et 6).

Le bord 15 présente un congé 15a, formant support, sur lequel viennent porter les bords du panneau rabattable 16, lorsque celui-ci est rabattu en position de fermeture, de manière à s'adapter parfaitement à l'ouverture formée par le fond du module 7. Il est ménagé dans ce congé 15a une pluralité de logements 15b, dans lesquels viennent se loger les extrémités de l'axe d'articulation 17b de la charnière 17 (figure 8).

Chaque panneau comprend une porte rabattable 19, articulée sur ses bords formant charnière 20. Ces portes s'adaptent dans les ouvertures 14 du module immédiatement supérieur. La position de fermeture de ces portes est maintenue grâce à l'emboîtement des pivots latéraux 21 dans les logements latéraux 22 situés à la partie supérieure des ouvertures 14 (figure 6).

Le module situé à la partie supérieure de la cage est fermé au moyen d'un panneau pliant grillagé 16a, similaire aux panneaux 16, mais dépourvu de porte 19. Ce panneau est maintenu en position de fermeture grâce à des moyens de verrouillage 23, articulés sur deux angles du cadre supérieur 4 (figure 7).

Les éléments des panneaux pliants 16, 16a et des portes 19 sont constitués par des pièces moulées en matière plastique.

Le cadre supérieur 4 est pourvu de butées latérales 24 et la plateforme inférieure 3 est disposée en saillie sur le même côté, de manière à former une butée 25 qui, conjointement avec les butées 24, assure le maintien latéral des cages juxtaposées, tout en ménageant un espace intermédiaire de ventilation.

Comme il en ressort de cet exposé et de l'examen des dessins, les avantages apportés par la présente cage multiple, comparativement aux autres cages multiples connues, sont les suivants:
- Simplification de la fabrication et du montage grâce à la réalisation de modules, de panneaux pliants et de portes sous forme d'éléments en matière plastique moulée, ce qui supprime les soudures, d'une manière générale, la fabrication de pièces par matriçage, emboutissage et usinage, à la différence des cages multiples réalisées à partir de plaques et de panneaux métalliques.
- Meilleure solidité et résistance aux efforts que la cage doit supporter en cours d'utilisation, en raison de l'extraordinaire homogénéité de l'ensemble, étant donné que les modules 7 sont parfaitement accouplés et alignés entre eux grâce à l'action solidaire des logements et des parties en saillie 12, 13, qui évitent tout déplacement latéral, et qui contribuent à l'effet de maintien assuré par les barres 2, qui retiennent rigidement les modules empilés. Les grilles en diagonale 8 empêchent toute déformation par torsion ou aplatissement. De plus, l'ensemble formant armature 1 agit comme une presse sur les modules, en les maintenant sous pression entre la plateforme 3 et le cadre 2
- Il est possible, en modifiant la longueur des montants 2 et le nombre de modules empilés 7, d'obtenir des cages de différentes capacités, sans qu'il soit nécessaire de modifier les dimensions de leurs éléments constituants, à l'excepté des montants 2.
- Le pliage et le dépliage des panneaux 16, 16a et des portes 19 s'effectue sans à-coups, sans risque de déformation des éléments ou possibilité de gêne dans leur déplacement. L'absence d'arêtes vives élimine tout risque de blessure des opérateurs manutentionnant la cage.
- La présence d'un rebord périphérique 15 forme une bordure intérieure fixe dans le fond de chaque module 7 intégrée monobloc dans chaque module, qui constitue une caractéristique fondamentale permettant d'améliorer la rigi-dité et la résistance de l'ensemble. De plus, ce rebord maintient l'écartement des bords des panneaux pliants 16 par rapport aux parois latérale des modules 7, de sorte qu'il est impossible que les panneaux ne s'enchevêtrent lors du pliage ou du dépliage.
- Les moyens de prise formant poignés 9, 9a, ménagés sur tous les bords de la cage et à différents niveaux, facilitent sa translation.

Les matériaux employés dans la fabrication des éléments constituants de la cage multiple, les formes et dimensions de ces derniers et tous les détails accessoires qu'ils pourraient présenter sont indépendants de l'objet de la présente invention à condition que ceci n'affecte pas son caractère fondamental.

## Revendications

1. Cage multiple pour le transport d'animaux vivants, comprenant une pluralité de compartiments empilés, chacun d'eux comportant une porte d'accès à l'avant et un fond pliant, auquel vient s'articuler la porte avant respective, caractérisée en ce qu'elle est composée d'un châssis rigide formé par une base inférieure (3) et un élément supérieur (4), réunis entre eux par des montants verticaux (2), traversant les parois d'une pluralité de modules formés par des compartiments (7), constitués par des parois grillagées moulées monobloc, des faces supérieure et inférieure ouvertes, l'une desdites faces étant occupée par un panneau grillagé pliable (16), séparant chaque module du module immédiatement adjacent, les modules étant emprisonnés entre les bases supérieure et inférieure du châssis.

2. Cage multiple pour le transport d'animaux vivants selon la revendication 1, caractérisée en ce que les parois des modules sont pourvues de renforts verticaux (9), et comportent des orifices longitudinaux (10) traversés par les montants (2).

3. Cage multiple pour le transport d'animaux vivants selon les revendications 1 et 2, caractérisée en ce que les renforts (9) sont ménagés aux angles des modules et dans les faces avant et arrière.

4. Cage multiple pour le transport d'animaux vivants selon les revendications 1, 2 et 3, caractérisée en ce qu'il est prévu, avec les renforts (9), aux bords des modules, des paires d'ouvertures (9a) définissant des moyens de prise formant poignée correspondants.

5. Cage multiple pour le transport d'animaux vivants selon la revendication 1, caractérisée en ce que l'élément supérieur (4) est en forme de cadre pourvu de moyens de verrouillage (23) destinés à fixer un couvercle grillagé et pliant (16a), fermant le module situé à la partie supérieure de la cage.

6. Cage multiple pour le transport d'animaux vivants selon la revendication 1, caractérisée en ce que les modules (7) sont dotés d'un rebord marginal (15) au niveau du fond, réalisé monobloc avec le module correspondant; le rebord constituant une partie fixe du fond de chaque module et recevant le panneau pliant (16) constituant la partie mobile du fond, articulé sur l'une de ses faces, ledit panneau, en position dépliée, venant en prise sur un congé (15a) ménagé dans le rebord.

7. Cage multiple pour le transport d'animaux vivants selon les revendications 1 et 6, caractérisée en ce que les panneaux pliants (16) sont articulés entre eux en forme de charnière (17) sur un axe de rotation (17a) dont les extrémités sont logées dans des cavités (15b) du rebord marginal (15) lorsque le panneau est déplié.

## Claims

1. Multiple cage for the transportation of live animals comprising a plurality of stacked compartments each comprising an access door at the front and a folding base to which the respective front door is articulated, characterized in that it is composed of a rigid frame formed by a lower base (3) and an upper element (4) joined together by vertical rods (2) extending through the walls of a plurality of modules formed by compartments (7) constituted by one-piece moulded lattice walls and open upper and lower faces, one of the said faces being occupied by a folding lattice panel (16) separating each module from the immediately adjacent module, the modules being confined between the upper and lower bases of the frame.

2. Multiple cage for the transportation of live animals according to Claim 1, characterized in that the walls of the modules have vertical reinforcements (9) and comprise longitudinal holes (10) through which the rods (2) extend.

3. Multiple cage for the transportation of live animals according to Claims 1 and 2, characterized in that the reinforcements (9) are disposed at the corners of the modules and in the front and rear faces.

4. Multiple cage for the transportation of live animals according to Claims 1, 2 and 3, characterized in that pairs of openings (9a) defining gripping means forming corresponding handles are provided with the reinforcements (9) at the edges of the modules.

5. Multiple cage for the transportation of live animals according to Claim 1, characterized in that the upper element (4) is in the form of a frame provided with locking means (23) for fixing a folding lattice cover (16a) closing the module situated at the top of the cage.

6. Multiple cage for the transportation of live animals according to Claim 1, characterized in that the modules (7) have an edge rim (15) formed integrally with the corresponding module at the level of the base, the rim constituting a fixed portion of the base of each module and receiving the folding panel (16) which constitutes the movable portion of the base and is articulated to one of its faces, the said panel engaging, in the unfolded position, on a fillet (15a) provided in the rim.

7. Multiple cage for the transportation of live animals according to Claims 1 and 6, characterized in that the folding panels (16) are articulated to one another in the form of a hinge (17) on pivot pin (17a) the ends of which are housed in cavities (15b) in the edge rim (15) when the panel is unfolded.

## Patentansprüche

1. Mehrfachkäfig für den Transport lebender Tiere, eine Vielzahl gestapelter Abteilungen umfassend, von denen eine jede eine Zugangstür vorne und einen Klappboden hat, an dem die jeweilige vordere Tür angelenkt ist, **dadurch gekennzeichnet**, daß er zusammengesetzt ist aus einem steifen Chassis, das durch eine untere Basis (3) gebildet ist und aus einem oberen Element (4), die untereinander über vertikale Pfosten (2) vereinigt sind, welche die Wandungen einer Vielzahl von durch Abteilungen (7) gebildete Module durchsetzen, welche durch mit Gitter versehene geformte einteilige Wandungen gebildet sind, und zwar mit offenen Ober- und Unterseiten, wobei eine der Seiten von einem klappbaren Gitterfeld (16) eingenommen ist, das jeden Modul vom unmittelbar angrenzenden Modul trennt, wobei die Module zwischen der oberen und unteren Basis des Chassis eingefangen sind.

2. Mehrfachkäfig für den Transport lebender Tiere nach Anspruch 1, **dadurch gekennzeichnet**, daß die Wandungen der Module mit vertikalen Verstärkungen (9) versehen sind und von den Pfosten (2) durchsetzte Längsöffnungen (10) umfassen.

3. Mehrfachkäfig für den Transport lebender Tiere nach Anspruch 1 und 2, **dadurch gekennzeichnet**, daß die Verstärkungen (6) in den Winkeln der Module und in der vorderen und hinteren Seite untergebracht sind.

4. Mehrfachkäfig für den Transport lebender Tiere nach Anspruch 1, 2 und 3, **dadurch gekennzeichnet**, daß mit den Verstärkungen (9) an den Rändern der Module Paare von Öffnungen (9a) vorgesehen sind, welche Griffmittel, die entsprechende Knaufe bilden, definieren.

5. Mehrfachkäfig für den Transport lebender Tiere nach Anspruch 1, **dadurch gekennzeichnet**, daß das obere Element (4) in Form eines Rahmens mit Verriegelungsmitteln (23) versehen ist, die dazu bestimmt sind, einen mit Gitter versehenen und klappbaren Deckel (16a) zu befestigen, der den am oberen Teil des Käfigs vorgesehen Modul schließt.

6. Mehrfachkäfig für den Transport lebender Tiere nach Anspruch 1, **dadurch gekennzeichnet**, daß die Module (7) mit einer Randausbildung (15) in Höhe des Bodens ausgestattet sind, der einteilig mit dem entsprechenden Modul ausgeführt ist; wobei der Randteil einen festen Teil des Bodens jedes Moduls bildet und die Klapp-Platte (16) aufnimmt, die den beweglichen Teil des Bodens bildet und an einer seiner Seiten angelenkt ist, wobei diese Platte in aufgeklappter Stellung fest in eine Ausnehmung (15a), die in der Randausbildung ausgespart ist, greift.

7. Mehrfachkäfig für den Transport lebender Tiere nach einem der Ansprüche 1 und 6, **dadurch gekennzeichnet**, daß die Klapp-Platten (16) untereinander scharnierartig (17) um eine Drehachse (17a) angelenkt sind, deren Enden in Ausnehmungen (15b) des Randteils (15) gelagert sind, wenn die Platte auseinandergeklappt ist.
